Europäisches Patentamt

European Patent Office

Office européen des brevets

(19)

(11) EP 0 591 497 B1

(12) **FASCICULE DE BREVET EUROPEEN**

(45) Date de publication et mention
de la délivrance du brevet:
**25.09.1996 Bulletin 1996/39**

(21) Numéro de dépôt: **93909018.9**

(22) Date de dépôt: **09.04.1993**

(51) Int Cl.6: **G01S 1/14**, G01S 13/75,
G01S 13/74, G01S 13/93

(86) Numéro de dépôt international:
**PCT/FR93/00365**

(87) Numéro de publication internationale:
**WO 93/21540 (28.10.1993 Gazette 1993/26)**

(54) **PROCEDE ET SYSTEME DE DETERMINATION DE LA POSITION ET DE L'ORIENTATION D'UN MOBILE, ET APPLICATIONS**

VERFAHREN UND VORRICHTUNG ZUR BESTIMMUNG DER POSITION UND DER AUSRICHTUNG VON BEWEGLICHEN KÖRPERN, MIT ANWENDUNGEN

METHOD AND SYSTEM FOR DETERMINING THE POSITION AND DIRECTION OF A MOVING OBJECT AND APPLICATIONS THEREOF

(84) Etats contractants désignés:
**DE FR GB IT**

(30) Priorité: **17.04.1992 FR 9204767**

(43) Date de publication de la demande:
**13.04.1994 Bulletin 1994/15**

(73) Titulaire: **THOMSON-CSF**
**75008 Paris (FR)**

(72) Inventeurs:
• **CHAZELAS, Jean**
**F-92402 Courbevoie Cédex (FR)**
• **SOUCHAY, Philippe**
**F-92402 Courbevoie Cédex (FR)**

(74) Mandataire: **Benoit, Monique et al**
**THOMSON-CSF**
**SCPI**
**B.P. 329**
**50, rue Jean-Pierre Timbaud**
**92402 Courbevoie Cédex (FR)**

(56) Documents cités:
**EP-A- 0 038 151**      **US-A- 5 045 859**

• **ELECTRONICS AND COMMUNICATION ENGINEERING JOURNAL no. 3, Juin 1991, LONDON GB pages 99 - 107 , XP235792 MANH ANH DO ET AL. 'New automatic vehicle identification system for detection of traffic without lane discipline**

**Description**

La présente invention concerne un procédé et un système de détermination de la position et de l'orientation d'un mobile, ainsi que des applications notamment dans le domaine de l'automobile.

Dans le domaine particulier de l'automobile, et plus précisément dans le cadre des études de systèmes d'anti-collision pour véhicules mobiles, la détection de mobiles par des techniques radar classiques représente un effort important. En effet, les études menées sont confrontées au fait que le mobile à détecter est tout d'abord non-coopératif, et renvoie de plus une information qui peut être noyée dans le fouillis de sol. Le niveau de fouillis de sol est très fortement lié à l'environnement (ponts, panneaux métalliques, tunnels, virages...), et entraîne, au niveau des radars détecteurs, un taux de fausse alarme très important. Il est alors nécessaire de disposer de traitements radars complexes pour obtenir la cinématique d'une scène.

D'autre part, il peut être extrêmement intéressant de connaître l'orientation ou le cap suivi par un mobile : considérons en effet la situation dans laquelle deux voitures se suivent, la première abordant un virage mais étant encore dans le champ de visibilité de la seconde voiture. On conçoit aisément que le danger existant pour la seconde voiture est différent selon que la première voiture a un cap qui lui permet d'appréhender normalement son virage ou bien, au contraire, un cap qui traduit une sortie de route.

Ainsi, un premier objet de l'invention est de proposer un procédé permettant de donner à la fois la position et l'orientation d'un mobile, sans nécessiter de traitements complexes.

Un second objet de l'invention est de rendre le mobile coopératif de façon à faciliter sa détection.

Un troisième objet de l'invention est de minimiser au maximum la contribution du fouillis de sol dû à l'environnement du mobile.

Plus précisément, l'invention concerne un procédé de détermination de la position et de l'orientation d'un mobile, caractérisé en ce qu'il consiste à :

- émettre, à partir d'un radar comportant deux voies de réception et de traitement, un signal dit d'interrogation à une fréquence f donnée ;
- retransmettre, à partir dudit mobile, au moins deux signaux dits de réponse, formés en modulant ledit signal d'interrogation reçu par le mobile respectivement par une fréquence de modulation $F_1$ et par une fréquence de modulation $F_2$ différente de $F_1$, les deux signaux de réponse étant retransmis selon deux diagrammes d'émission respectifs $D_1$ et $D_2$, dépointés, l'un par rapport à l'autre d'un angle $\alpha$, et chacun par rapport à la direction d'orientation (YY') du mobile respectivement d'un angle $\gamma_1$ et $\gamma_2$, au moins deux des trois angles $\alpha$, $\gamma_1$ et $\gamma_2$ étant fournis au radar ;

- mesurer, à partir des deux voies de réception, l'écartométrie d'un quelconque des deux signaux de réponse et en déduire la position angulaire $\varphi$ du mobile par rapport au radar ;
- mesurer le rapport des amplitudes des deux signaux de réponse reçus sur l'une des voies de réception ;
- en déduire, à partir des angles fournis, et de la forme des diagrammes $D_1$ et $D_2$, l'orientation $\theta$ du mobile par rapport au radar.

Nous verrons que le radar qui émet le signal d'interrogation peut être fixe ou mobile, ce qui permet d'appliquer le procédé à bon nombre d'applications dans le domaine de l'automobile (anticollision, contrôle du trafic routier et du respect du code de la route).

Enfin, nous verrons que le système selon l'invention est voué à une intégration progressive de nouveaux moyens permettant d'autres applications (péage automatique...), sans remettre en cause le système de base.

D'autres avantages apparaîtront au vu de la description suivante, faite en référence aux figures annexées :

- La figure 1 illustre une partie d'un système mettant en oeuvre le procédé de calcul de la position et de l'orientation d'un mobile selon l'invention ;
- La figure 2 montre un exemple des signaux reçus par le radar interrogateur, conformément au procédé de l'invention ;
- Les figures 3a et 3b sont deux exemples de réalisation d'un dispositif 1 de la figure 1 ;
- La figure 4 est un exemple de réalisation possible d'un radar interrogateur selon l'invention ;
- La figure 5 montre une amélioration possible du dispositif 1 de la figure 3a ;
- La figure 6 est une première application du procédé selon l'invention à un système de contrôle et de régulation du trafic routier ,
- La figure 7 est une seconde application du procédé selon l'invention à un système d'anti-collision pour véhicules mobiles ;
- La figure 8 est une troisième application du procédé selon l'invention au péage automatique sur autoroute.

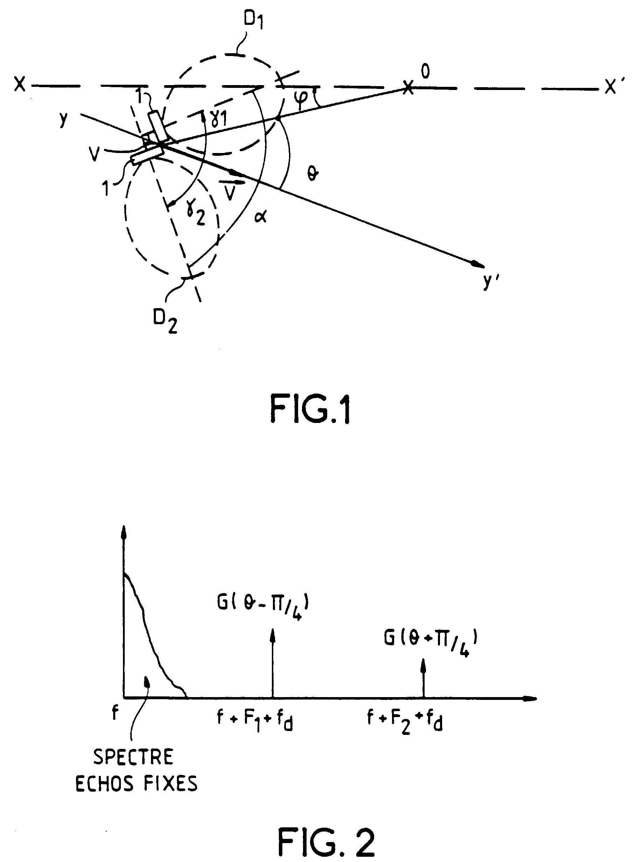

Sur la figure 1, un radar non représenté, localisé au point 0 émet un signal dit d'interrogation à une fréquence f donnée de sa bande de fréquence de travail, par exemple la bande W. Dans l'exemple pris, le signal d'interrogation est maximal dans l'axe XX'. Un mobile V se déplace à une vitesse $\vec{V}$ parallèlement à la direction YY'. Au niveau du radar interrogateur, la cinématique et la géométrie de la scène seront entièrement déterminées par la connaissance de :

- L'angle $\varphi$ donnant la position angulaire du mobile V par rapport à l'axe XX' du radar pris comme axe de référence ;

- L'angle θ entre la droite (OV) et l'axe YY' donnant l'orientation ou le cap suivi par le mobile V ;
- La fréquence Doppler $f_D$ donnant la vitesse radiale du mobile V.

Afin de déterminer au moins deux de ces trois paramètres, à savoir les deux angles θ et φ, le procédé selon l'invention propose de rendre le mobile V coopératif vis-à-vis du radar interrogateur. Pour ce faire, le mobile V est équipé d'au moins deux dispositifs 1 capables de recevoir le signal d'interrogation, puis de retransmettre chacun un signal de réponse formé, selon l'invention, en modulant le signal d'interrogation respectivement par des fréquences de modulation $F_1$ et $F_2$ différentes. Selon une caractéristique essentielle de l'invention, les deux signaux de réponse sont retransmis suivant deux diagrammes d'émission $D_1$ et $D_2$ des dispositifs 1, dépointés l'un par rapport à l'autre d'un angle α fixé, égal à 90° dans l'exemple de la figure, et chacun respectivement d'un angle $\gamma_1$ et $\gamma_2$ par rapport à la direction d'orientation (YY') du mobile. Au moins deux des trois angles α, $\gamma_1$ et $\gamma_2$ doivent être fournis au radar. Les diagrammes d'émission $D_1$ et $D_2$ sont préférentiellement identiques et/ou symétriques par rapport à la direction d'orientation YY' du mobile V, ceci afin de simplifier les traitements. Avantageusement, les fréquences $F_1$ et $F_2$ sont choisies de telle sorte que les deux signaux de réponse soient à des fréquences situées en dehors du spectre des échos de sol, tout en étant compatibles avec la bande de fréquence de travail du radar interrogateur.

En outre, pour faciliter, au niveau du radar, la séparation des deux signaux de réponse, ces deux fréquences de modulation $F_1$ et $F_2$ sont telles que leur différence soit supérieure en valeur absolue à la résolution en fréquence du radar.

La figure 2 montre un exemple de spectre de signaux de réponse pouvant être reçus par le radar interrogateur. Comme il a été dit précédemment, le signal interrogateur a été modulé par deux fréquences de modulation différentes $F_1$ et $F_2$, choisies de manière à créer, dans le spectre reçu par le radar interrogateur, au moins deux raies bien distinctes et situées en dehors du spectre des échos fixes. Si $f_D$ est la fréquence Doppler résultant du déplacement du mobile détecté, on peut choisir les deux raies qui sont alors à des fréquences $(F_1+f_D+f)$ et $(F_2+f_D+f)$. Chacune des raies possède, de plus, une amplitude qui dépend du recouvrement du diagramme de réception (non représenté) du radar interrogateur avec l'un et/ou l'autre des deux diagrammes d'émission $D_1$ et $D_2$, ce recouvrement dépendant lui-même de la position angulaire φ, de l'orientation θ du mobile V par rapport au radar interrogateur, et de la forme des diagrammes $D_1$ et $D_2$.

Pour déterminer l'orientation θ du mobile V, le procédé selon l'invention propose de mesurer le rapport des amplitudes des signaux de réponse reçus par le radar. Cette mesure, combinée avec la connaissance d'au moins deux des trois angles α, $\gamma_1$ et $\gamma_2$ ainsi que la connaissance des formes de diagrammes, permet de déduire, par un calcul simple, l'orientation θ du mobile.

Dans le cas de la figure 1, les angles $\gamma_1$ et $\gamma_2$ et α ont été choisis pour simplifier le traitement. En effet, les diagrammes $D_1$ et $D_2$ sont identiques et symétriques par rapport à la direction d'orientation, de telle sorte que

$$\varphi_1 = \varphi_2 = \frac{\alpha}{2}$$

L'angle α a, de plus, été choisi égal à $\frac{\pi}{2}$.

Si l'on mesure le rapport de l'amplitude du signal de réponse retransmis selon le diagramme $D_1$ sur l'amplitude du signal de réponse retransmis selon le diagramme $D_2$, ce rapport est alors proportionnel à

$$\text{tg}\left(\theta + \frac{\pi}{4}\right),$$

relation qui permet de calculer très simplement l'angle θ.

Pour ce qui concerne la détermination de la position angulaire φ , le radar interrogateur doit faire une mesure écartométrique classique, c'est-à-dire une comparaison des niveaux du signal reçu sur deux voies appelées classiquement voie somme et voie différence, le signal en question étant l'un ou l'autre des deux signaux de réponse.

Enfin, pour ce qui concerne la vitesse V du mobile, celle-ci peut être déterminée par tout système Doppler connu. Cependant, une variante du procédé selon l'invention, qui consiste à fournir au radar interrogateur les fréquences de modulation $F_1$ et $F_2$, permet avantageusement de calculer cette vitesse. En effet, comme nous l'avons dit précédemment, les deux raies reçues par le radar sont à des fréquences respectives $(f+f_D+F_1)$ et $(f+f_D+F_2)$. Connaissant les valeurs f, $F_1$ et $F_2$, on peut, en mesurant les deux fréquences reçues, en déduire la valeur de la fréquence Doppler $f_D$, donc de la vitesse radiale du mobile. La détermination de l'angle θ et de la vitesse radiale permet de déduire alors la vitesse du mobile.

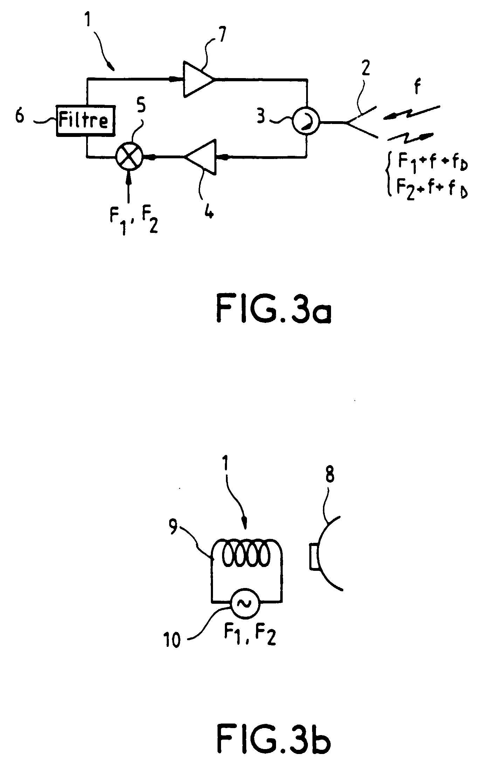

La figure 3a est un premier exemple de réalisation d'un dispositif 1 placé sur le mobile et capable, comme nous l'avons dit précédemment, de recevoir le signal d'interrogation à la fréquence f du radar, puis de retransmettre un signal de réponse formé, selon l'invention, en modulant le signal d'interrogation reçu par une fréquence de modulation $F_1$ (ou $F_2$). D'après la figure 3a, le dispositif comporte des moyens de réception 2 du signal d'interrogation, par exemple une antenne de type cornet. Le signal d'interrogation reçu à la fréquence f est alors préférentiellement amplifié par un amplificateur 4 à faible bruit. Le signal issu de l'amplificateur est modulé, selon l'invention, par une fréquence de modulation $F_1$ (ou $F_2$) par l'intermédiaire de moyens de modulation 5, par exemple d'un mélangeur. Les moyens de modulation 5 délivrent donc deux signaux, l'un à la fréquence $f+F_1$ (ou $f+F_2$), l'autre à la fréquence $f-F_1$ (ou $f-F_2$).

Il est avantageux d'utiliser un filtre 6 à la sortie des moyens de modulation 5 pour ne conserver qu'une seule fréquence, par exemple $f+F_1$ (ou $f+F_2$). Le signal restant est alors préférentiellement amplifié par un amplificateur 7 de manière à créer une surface équivalente radar supérieure à celle du mobile porteur du dispositif 1, et favoriser ainsi la détection. Enfin, le dispositif 1 comporte des moyens d'émission 2 du signal obtenu, c'est-à-dire du signal de réponse. Ici, les moyens d'émission sont identiques aux moyens de réception, ce qui explique la présence d'un circulateur hyperfréquence 3. Ceci ne constitue évidemment en rien une limitation. Compte tenu du mouvement du mobile porteur à une vitesse V, le signal de réponse retransmis par les moyens d'émission 2 est à la fréquence $f + F_1 + f_D$ (ou $f + F_2 + f_D$).

La figure 3b est une autre réalisation possible du dispositif 1, pour laquelle l'implémentation est du type électro-mécanique: une surface réflectrice 8 constitue ici les moyens d'émission et de réception du dispositif 1. Cette surface subit un déplacement mécanique lorsque l'on applique, sur un élément rayonnant 9, un signal de fréquence $F_1$ (ou $F_2$) par l'intermédiaire d'un générateur 10. Le résultat est identique à celui de la figure 3a, à savoir que l'on obtient un signal de réponse à une fréquence $f + F_1 + f_D$ (ou $f + F_2 + f_D$).

Dans l'un ou l'autre des exemples de réalisation précédents du dispositif 1, le mobile à détecter doit être muni d'au moins deux dispositifs 1 fixés par tous moyens sur le mobile, et orientés l'un par rapport à l'autre de façon à ce que leurs diagrammes d'émission soient dépointés d'un angle $\alpha$.

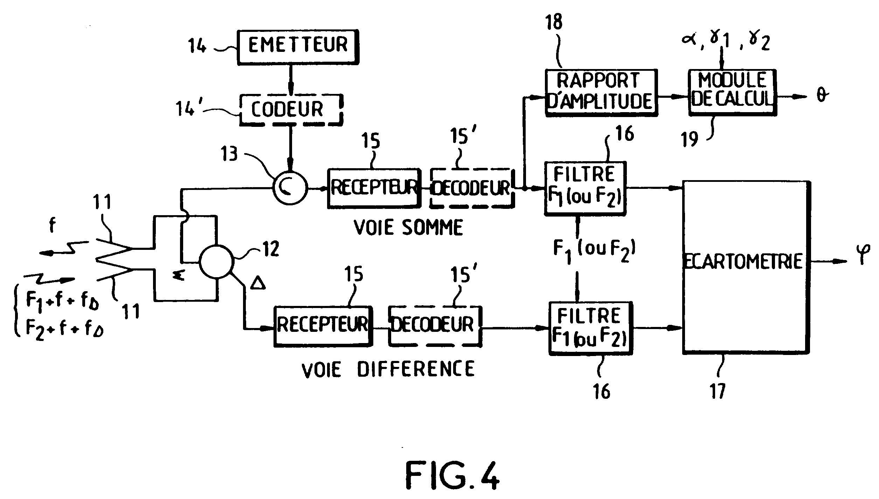

La figure 4 est un exemple de réalisation possible d'un radar interrogateur faisant partie du système selon l'invention.

Afin de pouvoir effectuer les mesures de distance et d'écartométrie (position angulaire du mobile détecté), le radar est du type monopulse, par exemple à comparaison d'amplitude, et dispose classiquement de deux voies de réception et de traitement, à savoir une voie somme $\Sigma$ et une voie différence $\Delta$. Le radar comprend deux sources adjacentes 11 connectées aux deux entrées d'une jonction hybride 12. Cette jonction hybride 12 délivre les signaux somme et différence respectivement sur la voie somme $\Sigma$ et sur la voie différence $\Delta$. En mode émission, c'est la voie somme qui est utilisée, d'où la présence d'un circulateur 13 pour acheminer vers les sources 11 le signal issu d'un émetteur 14. En mode réception, le radar dispose de moyens de mesure 15, 16 et 17 de l'écartométrie d'un quelconque des deux signaux de réponse pour en déduire la position angulaire $\varphi$ du mobile. Les signaux de réponse reçus sont tout d'abord traités par un récepteur 15, du type superhétérodyne, assurant classiquement la transposition en bande de base et l'amplification des signaux reçus. Lors du fonctionnement du système selon l'invention, les signaux en sortie des deux récepteurs 15 sont à des fréquences $F_1 + f_d$ et $F_2 + f_d$. Chaque voie de réception dispose d'un filtre 16 identique, centré sur l'une ou l'autre des fréquences $F_1$ et $F_2$.

Les signaux issus des filtres 16 sont alors fournis à un module 17 calculant l'écartométrie et délivrant ainsi la position angulaire $\varphi$ du mobile.

Pour ce qui concerne la détermination de l'orientation $\theta$ du mobile, le radar dispose de moyens de calcul 18 du rapport des amplitudes des signaux issus préférentiellement du récepteur 15 de la voie somme.

Ce rapport est ensuite fourni à un module 19 qui détermine alors, à l'aide d'au moins deux des trois angles $\alpha$, $\gamma_1$ et $\gamma_2$ définis précédemment, l'orientation $\theta$ recherchée.

Bien que nous n'ayons décrit, à titre d'exemple de réalisation possible, que le radar du type monopulse, on peut envisager d'adapter le procédé selon l'invention à d'autres formes d'ondes.

Nous avons, jusqu'à présent, décrit la fonction de base du système selon l'invention, à savoir la détermination de la position et de l'orientation d'un mobile par rapport à un radar. Une amélioration dans la fonction du système est possible en permettant aux dispositifs coopératifs 1 d'assurer en outre, des fonctions de décodage et/ou de codage.

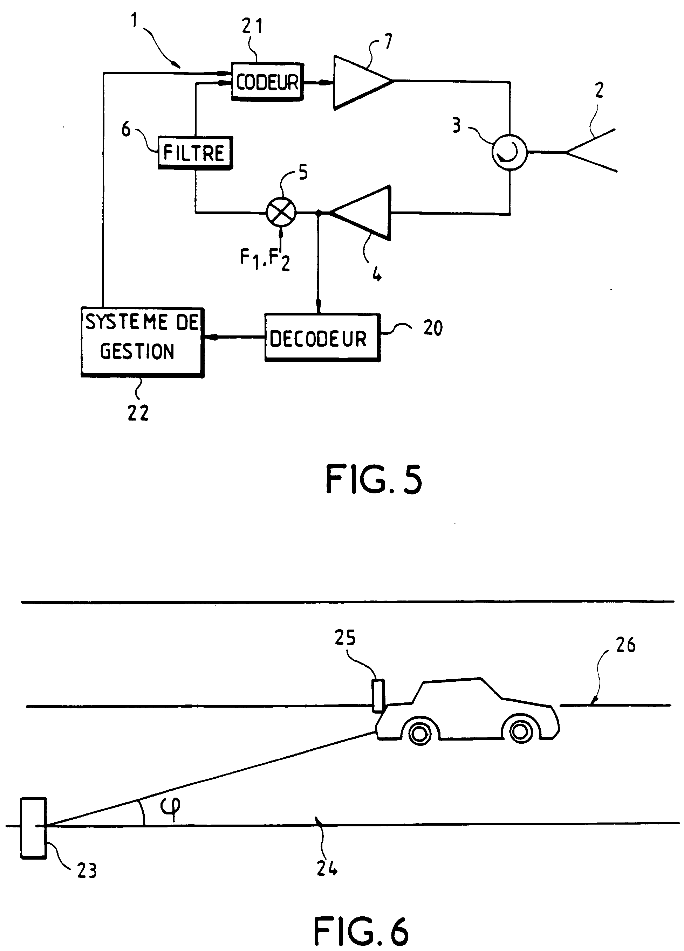

La figure 5 montre un dispositif 1 capable d'assurer de telles fonctions : les éléments du dispositif 1 de base sont identiques à ceux de la figure 3a, et ne seront par conséquent pas redécrits. L'amélioration consiste à équiper le dispositif 1 d'un décodeur 20 placé par exemple en sortie de l'amplificateur 4 et/ou d'un codeur 21, placé par exemple en amont de l'amplificateur 7. La raison d'être du décodeur 20 suppose, bien entendu, que les signaux d'interrogation contiennent de l'information codée générée par tous moyens connus de l'homme du métier (codes binaires ou codes de BARKER). Au niveau du radar représenté sur la figure 4, les signaux issus de l'émetteur 14 sont codés, par exemple en phase, par un codeur 14' représenté en pointillés. L'information décodée est ensuite fournie à un système de gestion 22 qui peut alors décider s'il faut répondre, quel doit être le contenu de la réponse...

Le codeur 21 permet d'envoyer, dans le signal de réponse, toutes sortes d'informations: il peut s'agir de l'identification du mobile, de la fréquence de modulation propre au dispositif 1, des angles $\alpha$, $\gamma_1$ et $\gamma_2$ définis précédemment.

Ces exemples ne sont pas limitatifs, et un grand intérêt du système selon l'invention est de permettre une intégration progressive de nouveaux services, sans remettre en cause la définition initiale du système. Dans l'exemple de la figure 5, le codeur 21 est commandé par le système de gestion 22. Dans le système selon l'invention, pour lequel au moins deux dispositifs 1 sont nécessaires, il existe plusieurs variantes d'intégration : ainsi, on peut choisir de ne munir qu'un seul des dispositifs 1 de codeur et/ou décodeur. On peut également coupler un unique ensemble (système de gestion, décodeur, codeur) aux deux dispositifs 1. Si les signaux de réponse sont codés, le radar interrogateur de la figure 4 doit être pourvu de décodeurs 15', situés par exemple en sortie des récepteurs 15 de chaque voie.

Un autre grand intérêt du procédé et du système selon l'invention réside dans les nombreuses applications qu'ils peuvent avoir, notamment dans le domaine de l'automobile :

La figure 6 est une première application du procédé selon l'invention au contrôle et à la régulation du trafic routier :

Sur cette figure, le radar interrogateur 23 du système selon l'invention est placé sur le bord d'une route 24. L'autre partie 25 du système, i.e. celle comportant les premier et second dispositifs, est placée par exemple sur l'arrière d'une voiture V.

Le radar 23 peut ainsi connaître à tout moment, la position $\varphi$ et l'orientation $\theta$ du véhicule, et savoir par conséquent si un danger quelconque émane de ce véhicule. Le radar 23 peut également vérifier que le conducteur du véhicule V ne fait aucune entorse au code de la route (dépassement d'une vitesse limitée, dépassement d'une ligne continue 26 ...). Si les dispositifs coopératifs du véhicule sont en outre munis de codeurs d'information, ils peuvent également envoyer directement au radar leur identification (numéro d'immatriculation, nom du propriétaire du véhicule ...).

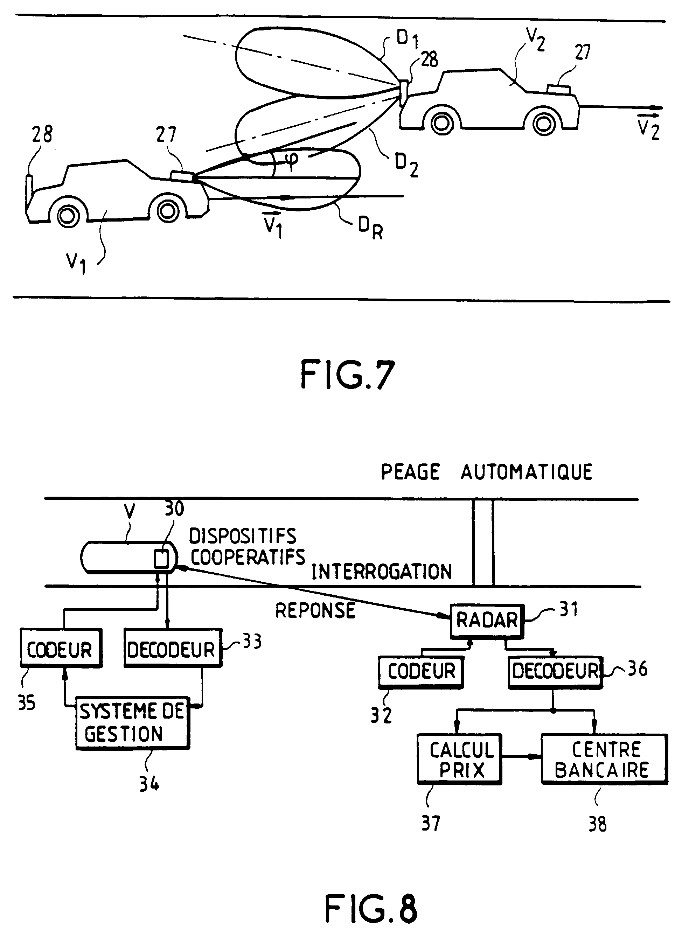

La figure 7 est une seconde application du procédé selon l'invention à un dispositif d'anticollision pour les véhicules mobiles ; Sur cette figure, on a représenté deux véhicules $V_1$ et $V_2$ munis chacun d'un système selon l'invention :

Le radar interrogateur, référencé 27 sur le dessin, est placé préférentiellement à l'avant de chaque véhicule, et l'ensemble 28 composé de deux dispositifs coopératifs, est placé à l'arrière de chaque véhicule.

Lorsque le radar 27 du véhicule $V_1$ envoie un signal interrogateur selon le diagramme $D_R$, il reçoit du véhicule $V_2$ deux signaux de réponse émis, conformément à l'invention, selon les diagrammes dépointés $D_1$ et $D_2$. Le véhicule $V_1$ connaît donc, à tout moment, la position, l'orientation et la vitesse du véhicule $V_2$ qui le précède.

Une troisième application du système selon l'invention concerne le péage automatique sur les autoroutes, illustrée par la figure 8 :

Un véhicule V muni à son avant, d'un ensemble 30 composé de dispositifs coopératifs tels que décrits précédemment, arrive au niveau d'un péage automatique. Un radar interrogateur 31 situé sur le bord de la route comporte un codeur 32 qui lui permet d'envoyer au véhicule V une interrogation précise, par exemple sur l'endroit où le véhicule V est entré sur l'autoroute, sur le numéro de carte bancaire du propriétaire du véhicule, ou toute autre information (Etat du trafic...). A la réception de ce signal d'interrogation, les dispositifs coopératifs 30 délivrent le signal reçu à un décodeur 33, lequel fournit l'information décodée à un système de gestion 34. Le véhicule peut alors répondre suivant le procédé de l'invention, en envoyant sous forme de codes, à l'aide d'un codeur 35, contrôlé par le système de gestion 34, les réponses attendues. Ces réponses peuvent consister en un code représentatif du point d'entrée du véhicule sur l'autoroute, du numéro de la carte bancaire, de la plaque d'immatriculation du véhicule ... Le radar 31 dispose également d'un décodeur 36 d'informations contenues dans les signaux de réponse. Ces informations décodées sont ensuite exploitées par des organes intrinsèques au radar (module 37 de calcul du prix à payer) ou par des organes extérieurs, comme par exemple un centre bancaire 38, qui vérifie la validité du code bancaire donné et effectue le débit suivant le prix calculé par le module 37.

En conclusion, il est important de noter que le procédé selon l'invention permet d'avoir, avec un même système de base, toutes sortes d'applications dans le domaine de l'automobile. Il suffit pour cela d'intégrer à la demande, les nouveaux services sur un système existant, sans modifier ni gêner sa fonction première.

## Revendications

1. Procédé de détermination de la position et de l'orientation d'un mobile, caractérisé en ce qu'il consiste à :

   - émettre, à partir d'un radar comportant deux voies de réception et de traitement, un signal dit d'interrogation à une fréquence f donnée ;
   - retransmettre, à partir dudit mobile, au moins deux signaux dits de réponse, formés en modulant ledit signal d'interrogation reçu par le mobile respectivement par une fréquence de modulation $F_1$ et par une fréquence de modulation $F_2$ différente de $F_1$, les deux signaux de réponse étant retransmis selon deux diagrammes d'émission respectifs $D_1$ et $D_2$, dépointés, l'un par rapport à l'autre d'un angle $\alpha$, et chacun par rapport à la direction d'orientation (YY') du mobile respectivement d'un angle $\gamma_1$ et $\gamma_2$, au moins deux des trois angles $\alpha$, $\gamma_1$ et $\gamma_2$ étant fournis au radar ;
   - mesurer, à partir des voies de réception, l'écartométrie d'un quelconque des deux signaux de réponse et en déduire la position angulaire $\varphi$ du mobile par rapport au radar ;
   - mesurer le rapport des amplitudes des deux signaux de réponse reçus sur l'une des voies de réception ;
   - en déduire, à partir des angles fournis et de la forme des diagrammes $D_1$ et $D_2$, l'orientation $\theta$ du mobile par rapport au radar.

2. Procédé selon la revendication 1, caractérisé en ce que lesdites fréquences de modulation $F_1$ et $F_2$ sont choisies de telle façon que les fréquences desdits signaux de réponse soient en dehors du spectre des échos fixes reçus par le radar.

3. Procédé selon l'une quelconque des revendications précédentes, caractérisé en ce que lesdits diagrammes d'émission $D_1$ et $D_2$ sont symétriques par rapport à ladite direction d'orientation (YY') du mobile.

4. Procédé selon l'une quelconque des revendications précédentes, caractérisé en ce que lesdits diagrammes d'émission $D_1$ et $D_2$ sont identiques.

5. Procédé selon l'une quelconque des revendications précédentes, caractérisé en ce que lesdites fréquences de modulation $F_1$ et $F_2$ sont fournies au radar de telle sorte qu'il puisse, en mesurant les fréquences des signaux de réponse reçus, en déduire la vitesse du mobile.

6. Procédé selon l'une quelconque des revendications précédentes, caractérisé en ce que lesdits signaux de réponse comportent en outre des informations codées et en ce que le procédé prévoit une étape supplémentaire de décodage de ces informations au niveau du radar.

7. Procédé selon l'une quelconque des revendications précédentes, caractérisé en ce que le signal d'interrogation comporte en outre des informations codées, et en ce que le procédé prévoit une étape supplémentaire de décodage de ces informations au niveau du mobile.

8. Système de détermination de la position et de l'orientation d'un mobile pour la mise en oeuvre du procédé selon l'une quelconque des revendications 1 à 7, caractérisé en ce qu'il comporte:

   - un radar disposant de deux voies de réception et de traitement appelées voie somme et voie différence, et de moyens (11, 12, 13, 14) émettant un signal d'interrogation à une fréquence f donnée ;
   - au moins un premier et un second dispositifs (1), placés sur ledit mobile, comportant chacun des moyens de réception (2, 3, 4 ; 8) du signal d'interrogation, des moyens de modulation (5 ; 9, 10) du signal d'interrogation reçu par une fréquence de modulation $F_1$ pour le premier dispositif, et $F_2$ différente de $F_1$ pour le second dispositif, et des moyens d'émission (2, 3, 7 ; 8) du signal modulé comme signal de réponse, les deux signaux de réponse issus du premier et du second dispositif (1) étant émis selon deux diagrammes d'émission respectifs $D_1$ et $D_2$, dépointés l'un par rapport à l'autre d'un angle $\alpha$, et chacun par rapport à la direction d'orientation (YY') du mobile respectivement d'un angle $\gamma_1$ et $\gamma_2$ ;
   - des moyens de mesure (15, 16, 17), à partir des deux voies, de l'écartométrie d'un quelconque des deux signaux de réponse pour en déduire la position angulaire $\varphi$ du mobile par rapport au radar ;
   - des moyens de calcul (18) du rapport des amplitudes des deux signaux de réponse reçus sur la voie somme ;
   - un module (19) de détermination de l'orientation $\theta$ du mobile à partir du calcul dudit rapport.

9. Système de détermination de la position et de l'orientation d'un mobile selon la revendication 8, caractérisé en ce que les moyens de modulation (5) sont constitués par un mélangeur, et en ce que chacun des premier et second dispositifs (1) comporte en outre un filtre (6) à la sortie dudit mélangeur pour ne conserver qu'une seule fréquence.

10. Système de détermination de la position et de l'orientation d'un mobile selon l'une quelconque des revendications 8 et 9, caractérisé en ce que les moyens de modulation (9, 10) sont constitués d'un élément rayonnant (9) sur lequel on applique, par l'intermédiaire d'un générateur (10), un signal de fréquence $F_1$ pour le premier dispositif et $F_2$ pour le second dispositif, cet élément rayonnant faisant subir à une surface réflectrice (8) constituant lesdits moyens d'émission, un déplacement mécanique.

11. Système de détermination de la position et de l'orientation d'un mobile selon l'une quelconque des revendications 8 et 9, caractérisé en ce que le premier et/ou le second dispositif (1) possède en outre un codeur (21) pour envoyer des informations codées dans le signal de réponse, et un système de gestion (22) des informations codées, et en ce que le radar comporte au moins un décodeur (15').

12. Système de détermination de la position et de l'orientation d'un mobile selon l'une quelconque des revendications 8 à 11, caractérisé en ce que le radar comporte en outre un codeur (14') pour coder l'information dans le signal d'interrogation, et en ce que le premier et/ou le second dispositif (1) possède un décodeur (20) pour décoder ces informations.

13. Système de détermination de la position et de l'orientation d'un mobile selon l'une quelconque des revendications 8 à 12, caractérisé en ce que lesdits moyens de mesure (15, 16, 17) sont constitués, sur chaque voie de traitement :

   - d'un récepteur (15) ;
   - d'un filtre (16) en sortie dudit récepteur (15), centré sur l'une ou l'autre des fréquences de modulation $F_1$ et $F_2$,

et d'un module (17) recevant les sorties des deux filtres (16) et calculant la position angulaire φ.

14. Application du système selon l'une quelconque des revendications 8 à 13 au contrôle et à la régulation du trafic de véhicules routiers, caractérisée en ce que le radar (23) est placé au bord de la route et en ce que chaque véhicule est muni du premier et second dispositifs (25).

15. Application du système selon l'une quelconque des revendications 8 à 13 à un dispositif d'anti-collision pour véhicules, caractérisée en ce que chaque véhicule comporte à son avant ledit radar (27), et à son arrière, lesdits premier et second dispositifs (28).

16. Application du système selon les revendications 11 et 12, au péage automatique pour véhicules sur une autoroute, caractérisée en ce que le radar (31) envoie un signal d'interrogation comportant des informations codées à un véhicule muni des deux dispositifs (30) reliés à un décodeur (33) qui décode le signal d'interrogation et fournit les informations à un système de gestion (34), en ce que le système de gestion (34) contrôle alors le codeur (35) du véhicule pour envoyer, dans les signaux de réponse, des informations codées relatives au point d'entrée sur l'autoroute du véhicule et au code de la carte bancaire du conducteur, et en ce que le décodeur (36) du radar (31) décode les informations contenues dans les signaux de réponse pour les fournir à un module (37) de calcul du prix à payer et à un centre bancaire (38) effectuant le débit sur la carte bancaire.

**Patentansprüche**

1. Verfahren zur Bestimmung der Position und der Fahrtrichtung eines Fahrzeugs, dadurch gekennzeichnet, daß

- von einem Radargerät, das zwei Empfangs- und Verarbeitungskanäle aufweist, ein Fragesignal bei einer gegebenen Frequenz f ausgesendet wird;
- vom Fahrzeug mindestens zwei Antwortsignale zurückgesendet werden, die gebildet werden, indem das vom Fahrzeug empfangene Fragesignal von einer Modulationsfrequenz $F_1$ bzw. einer Modulationsfrequenz $F_2$, die sich von $F_1$ unterscheidet, moduliert wird, wobei die beiden Antwortsignale gemäß zwei Sendediagrammen $D_1$ und $D_2$ zurückgesendet werden, die gegeneinander um einen Winkel α und in Bezug auf die Fahrtrichtung (YY') des Fahrzeugs um einen Winkel $\gamma_1$ bzw. $\gamma_2$ geschwenkt sind, wobei mindestens zwei der drei Winkel α,

$\gamma_1$ und $\gamma_2$ dem Radargerät geliefert werden;
- aufgrund der beiden Empfangskanäle die elektronische Abstandsmessung eines beliebigen der beiden Antwortsignale durchgeführt und daraus die Winkelposition φ des Fahrzeugs in Bezug auf das Radargerät abgeleitet wird;
- das Verhältnis der Amplituden der beiden Antwortsignale gemessen wird, die auf einem der Empfangskanäle empfangen werden,
- daraus von den gelieferten Winkeln und der Form der Diagramme $D_1$ und $D_2$ die Fahrtrichtung Θ des Fahrzeugs in Bezug auf das Radargerät abgeleitet wird.

2. Verfahren nach Anspruch 1, dadurch gekennzeichnet, daß die Modulationsfrequenzen $F_1$ und $F_2$ so gewählt werden, daß die Frequenzen der Antwortsignale sich außerhalb des Spektrums der vom Radargerät empfangenen festen Echos befinden.

3. Verfahren nach einem beliebigen der vorhergehenden Ansprüche, dadurch gekennzeichnet, daß die Sendediagramme $D_1$ und $D_2$ in Bezug auf die Fahrtrichtung (YY') des Fahrzeugs symmetrisch liegen.

4. Verfahren nach einem beliebigen der vorhergehenden Ansprüche, dadurch gekennzeichnet, daß die Sendediagramme $D_1$ und $D_2$ einander gleichen.

5. Verfahren nach einem beliebigen der vorhergehenden Ansprüche, dadurch gekennzeichnet, daß die Modulationsfrequenzen $F_1$ und $F_2$ dem Radargerät derart geliefert werden, daß es, indem es die Frequenzen der empfangenen Antwortsignale mißt, daraus die Geschwindigkeit des Fahrzeugs ableiten kann.

6. Verfahren nach einem beliebigen der vorhergehenden Ansprüche, dadurch gekennzeichnet, daß diese Antwortsignale außerdem kodierte Informationen enthalten und daß das Verfahren eine zusätzliche Phase der Dekodierung dieser Informationen im Radargerät vorsieht.

7. Verfahren nach einem beliebigen der vorhergehenden Ansprüche, dadurch gekennzeichnet, daß das Fragesignal außerdem kodierte Informationen enthält und daß das Verfahren eine zusätzliche Phase der Dekodierung dieser Informationen im Fahrzeug vorsieht.

8. System zur Bestimmung der Position und der Fahrtrichtung eines Fahrzeugs, das für die Anwendung des Verfahrens nach einem beliebigen der Ansprüche 1 bis 7 bestimmt ist, dadurch gekennzeichnet, daß es aufweist:

- ein Radargerät, das über zwei Empfangs- und Verarbeitungskanäle, die Summenkanal und Differenzkanal genannt werden, und über Mittel (11, 12, 13, 14) verfügt, die ein Fragesignal bei einer gegebenen Frequenz f senden;

- mindestens eine erste und eine zweite Vorrichtung (1), die auf dem Fahrzeug angeordnet sind und je Empfangsmittel (2, 3, 4; 8) für das Fragesignal, Mittel (5; 9, 10) zur Modulation des empfangenen Fragesignals mit einer Modulationsfrequenz $F_1$ für die erste Vorrichtung und mit einer anderen Modulationsfrequenz $F_2$ für die zweite Vorrichtung und Mittel (2, 3, 7; 8) für die Aussendung des modulierten Signals als Antwortsignal aufweisen, wobei die beiden Antwortsignale, die von der ersten und der zweiten Vorrichtung (1) kommen, gemäß zwei Sendediagrammen $D_1$ bzw. $D_2$ gesendet werden, die zueinander um einen Winkel $\alpha$ und je in Bezug auf die Fahrtrichtung (YY') des Fahrzeugs um einen Winkel $\gamma_1$ bzw. $\gamma_2$ geschwenkt sind;

- Mittel zur Zweikanal-Abstandsmessung (15, 16, 17) eines beliebigen der beiden Antwortsignale, um daraus die Winkelstellung $\varphi$ des Fahrzeugs in Bezug auf das Radargerät abzuleiten;

- Mittel (18) zur Berechnung des Verhältnisses der Amplituden der beiden auf dem Summenkanal empfangenen Antwortsignale;

- einen Modul (19) zur Bestimmung der Fahrtrichtung $\Theta$ des Fahrzeugs ausgehend von der Berechnung des Verhältnisses.

9. System zur Bestimmung der Position und der Fahrtrichtung eines Fahrzeugs nach Anspruch 8, dadurch gekennzeichnet, daß die Modulationsmittel (5) aus einer Mischstufe bestehen und daß jede der ersten und zweiten Vorrichtungen (1) außerdem ein Filter (6) am Ausgang der Mischstufe aufweist, um nur eine einzige Frequenz durchzulassen.

10. System zur Bestimmung der Position und der Fahrtrichtung eines Fahrzeugs nach einem beliebigen der Ansprüche 8 und 9, dadurch gekennzeichnet, daß die Modulationsmittel (9, 10) aus einem strahlenden Element (9) bestehen, an das über einen Generator (10) ein Signal einer Frequenz $F_1$ für die erste Vorrichtung und $F_2$ für die zweite Vorrichtung angelegt wird, wobei dieses strahlende Element eine reflektierende Fläche (8), die die Sendemittel bildet, einer mechanischen Verschiebung unterwirft.

11. System zur Bestimmung der Position und der Fahrtrichtung eines Fahrzeugs nach einem beliebigen der Ansprüche 8 und 9, dadurch gekennzeichnet, daß die erste und/oder die zweite Vorrichtung (1) außerdem einen Kodierer (12), um kodierte Informationen im Antwortsignal auszusenden, und ein Verwaltungssystem (22) für die kodierten Informationen aufweist, und daß das Radargerät mindestens einen Dekodierer (15') besitzt.

12. System zur Bestimmung der Position und der Fahrtrichtung eines Fahrzeugs nach einem beliebigen der Ansprüche 8 bis 11, dadurch gekennzeichnet, daß das Radargerät außerdem einen Kodierer (14') aufweist, um die Information im Fragesignal zu kodieren, und daß die erste und/oder die zweite Vorrichtung (1) einen Dekodierer (20) aufweist, um diese Informationen zu dekodieren.

13. System zur Bestimmung der Position und der Fahrtrichtung eines Fahrzeugs nach einem beliebigen der Ansprüche 8 bis 12, dadurch gekennzeichnet, daß die Meßmittel (15, 16, 17) in jedem Verarbeitungskanal bestehen aus:

- einem Empfänger (15);
- einem Filter (16) am Ausgang des Empfängers (15), das je auf eine der Modulationsfrequenzen $F_1$ bzw. $F_2$ zentriert ist,
- und einem Modul (17), der die Ausgänge der beiden Filter (16) empfängt und die Winkelposition $\varphi$ berechnet.

14. Anwendung des Systems nach einem beliebigen der Ansprüche 8 bis 13 für die Kontrolle und Regelung des Verkehrs von Straßenfahrzeugen, dadurch gekennzeichnet, daß das Radargerät (23) sich am Straßenrand befindet und daß jedes Fahrzeugs mit der ersten und der zweiten Vorrichtung (25 ausgestattet ist.

15. Anwendung des Systems nach einem beliebigen der Ansprüche 8 bis 13 auf eine Antikollisionsvorrichtung für Fahrzeuge, dadurch gekennzeichnet, daß jedes Fahrzeug vorne das Radargerät (27) und hinten die erste und die zweite Vorrichtung (28) enthält.

16. Anwendung des Systems nach den Ansprüchen 11 und 12 auf eine automatische Mautstelle für Fahrzeuge auf einer Autobahn, dadurch gekennzeichnet, daß das Radargerät (31) ein kodierte Informationen enthaltendes Fragesignal an ein Fahrzeug sendet, das mit den beiden Vorrichtungen (30) ausgestattet ist, die mit einem Dekodierer (33) verbunden sind, welcher das Fragesignal dekodiert und die Informationen an ein Verwaltungssystem (34) sendet, daß das Verwaltungssystem (34) dann den Kodierer des Fahrzeugs steuert, um in den Antwortsignalen kodierte Informationen betreffend die Einfahrstelle des Fahrzeugs auf die Autobahn und den Kode der Scheckkarte des Fahrers zu senden, und daß der Dekodierer (36) des Radargeräts (31) die in den Antwortsignalen enthaltenen Informationen dekodiert, um sie an einen Modul (37) zur Berechnung des zu zahlenden Preises und an ein Bankzentrum (38) zu senden, das das Konto des Scheckkarteninhabers belastet.

**Claims**

1. Process for determining the position and orientation of a mobile, characterized in that it consists in:

   - transmitting, from a radar containing two channels for reception and for processing, a so-called interrogation signal with a given frequency f;
   - retransmitting, from the said mobile, at least two so-called response signals formed by modulating the said interrogation signal received by the mobile respectively by a modulating frequency $F_1$ and by a modulating frequency $F_2$ which differs from $F_1$, the two response signals being retransmitted according to two respective transmission patterns $D_1$ and $D_2$ which differ in aim relative to one another by an angle $\alpha$, and each relative to the direction of orientation (YY') of the mobile by an angle $\gamma_1$ and $\gamma_2$ respectively, at least two of the three angles $\alpha$, $\gamma_1$ and $\gamma_2$ being supplied to the radar;
   - measuring, from the reception channels, the angular deviation of either of the two response signals and deducing therefrom the angular position $\phi$ of the mobile relative to the radar;
   - measuring the ratio of the amplitudes of the two response signals received on one of the reception channels;
   - deducing therefrom, based on the angles supplied and on the shape of the patterns $D_1$ and $D_2$, the orientation $\theta$ of the mobile relative to the radar.

2. Process according to Claim 1, characterized in that the said modulating frequencies $F_1$ and $F_2$ are chosen such that the frequencies of the said response signals are outside the spectrum of the fixed echoes received by the radar.

3. Process according to either one of the preceding claims, characterized in that the said transmission patterns $D_1$ and $D_2$ are symmetric relative to the said direction of orientation (YY') of the mobile.

4. Process according to any one of the preceding claims, characterized in that the said transmission patterns $D_1$ and $D_2$ are identical.

5. Process according to any one of the preceding claims, characterized in that the said modulating frequencies $F_1$ and $F_2$ are supplied to the radar so that it can, by measuring the frequencies of the response signals received, deduce therefrom the velocity of the mobile.

6. Process according to any one of the preceding claims, characterized in that the said response signals furthermore include encoded information and in that the process provides for an additional step for decoding this information at the radar.

7. Process according to any one of the preceding claims, characterized in that the interrogation signal furthermore includes encoded information, and in that the process provides for an additional step for decoding this information at the mobile.

8. System for determining the position and orientation of a mobile for implementing the process according to any one of Claims 1 to 7, characterized in that it includes:

   - a radar employing two channels for reception and for processing, called the sum channel and the difference channel, and means (11, 12, 13, 14) which emit an interrogation signal at a given frequency f;
   - at least one first and one second device (1), which are placed on the said mobile, each including means (2, 3, 4; 8) for receiving the interrogation signal, means (5; 9, 10) for modulating the received interrogation signal by a modulating frequency $F_1$ for the first device, and $F_2$, which differs from $F_1$, for the second device, and means (2, 3, 7; 8) for transmitting the modulated signal as response signal, the two response signals leaving the first and the second devices (1) being transmitted according to two respective transmission patterns $D_1$ and $D_2$, which differ in aim relative to one another by an angle a, and each relative to the direction of orientation (YY') of the mobile by an angle $\gamma_1$ and $\gamma_2$ respectively;
   - means (15, 16, 17) for measuring, from the two channels, the angular deviation of either of the two response signals in order to deduce therefrom the angular position $\phi$ of the mobile relative to the radar;
   - means (18) for computing the ratio of the amplitudes of the two response signals received on the sum channel;
   - a module (19) for determining the orientation $\theta$ of the mobile based on computing the said ratio.

9. System for determining the position and orientation of a mobile according to Claim 8, characterized in that the modulating means (5) consist of a mixer, and in that each of the first and second devices (1) furthermore includes a filter (6) at the output of the said mixer-so as to retain just a single frequency.

10. System for determining the position and orientation of a mobile according to either one of Claims 8 and 9, characterized in that the modulating means (9, 10) consist of a radiating element (9) to which are applied, by way of a generator (10), a signal with frequency $F_1$ for the first device and $F_2$ for the second device, this radiating element causing a reflector surface (8) constituting the said transmission means to undergo a mechanical displacement.

11. System for determining the position and orientation of a mobile according to either one of Claims 8 and 9, characterized in that the first and/or the second device (1) furthermore possesses an encoder (21) for sending encoded information in the response signal, and a system (22) for managing the encoded information, and in that the radar includes at least one decoder (15').

12. System for determining the position and orientation of a mobile according to any one of Claims 8 to 11, characterized in that the radar furthermore includes an encoder (14') for encoding the information in the interrogation signal, and in that the first and/or second device (1) possesses a decoder (20) for decoding this information.

13. System for determining the position and orientation of a mobile according to any one of Claims 8 to 12, characterized in that the said measuring means (15, 16, 17) consist, in each processing channel:

   -    of a receiver (15);
   -    of a filter (16) at the output of the said receiver (15), centred on one or the other of the modulating frequencies $F_1$ and $F_2$,

and of a module (17) receiving the outputs from the two filters (16) and computing the angular position $\phi$.

14. Application of the system according to any one of Claims 8 to 13 to the control and regulation of road-vehicle traffic, characterized in that the radar (23) is placed on the road verge and in that each vehicle is fitted with the first and second devices (25).

15. Application of the system according to any one of Claims 8 to 13 to an anti-collision device for vehicles, characterized in that each vehicle includes the said radar (27) at its front, and the said first and second devices (28) at its rear.

16. Application of the system according to Claims 11 and 12 to automatic toll points for vehicles on a motorway, characterized in that the radar (31) sends an interrogation signal containing encoded information to a vehicle fitted with the two devices (30) connected to a decoder (33) which decodes the interrogation signal and supplies the information to a management system (34), in that the management system (34) then controls the encoder (35) of the vehicle in order to send, in the response signals, encoded information relating to the point at which the vehicle joined the motorway and to the code of the driver's bank card, and in that the decoder (36) of the radar (31) decodes the information contained in the response signals in order to supply it to a module (37) for computing the charge to be paid and to a banking centre (38) which debits the bank card.

FIG.1

$G(\theta - \pi/4)$

$G(\theta + \pi/4)$

$f$        $f + F_1 + f_d$        $f + F_2 + f_d$

SPECTRE
ECHOS FIXES

FIG. 2

FIG.3a

FIG.3b

FIG.4

**FIG. 5**

**FIG. 6**

EP 0 591 497 B1

FIG.7

PEAGE AUTOMATIQUE

FIG.8

15